# EUROPEAN PATENT SPECIFICATION

(11) **EP 1 630 015 B1**
(45) Date of publication and mention of the grant of the patent: **30.05.2007**
(21) Application number: 05076842.3
(22) Date of filing: 09.08.2005
(51) Int. Cl.: B60H 1/00

(54) **Valve driving mechanism for an HVAC system**
Klappenführungsmechanismus für eine Klimaanlage
Mécanisme de commande de volet pour système de climatisation

(30) Priority: 27.08.2004 US 605053 P; 27.04.2005 US 115567
(43) Date of publication of application: 01.03.2006
(73) Proprietor: Delphi Technologies, Inc., Troy, MI 48007 (US)
(72) Inventor: Stevenson, Mark W., Appleton, NY 14008 (US)
(74) Representative: Denton, Michael John

(56) References cited:
- DE-A1- 10 201 771
- US-A1- 2003 145 978
- US-A1- 2004 194 947

## Description

### Technical Field

The subject invention relates to an automotive heating ventilation and air conditioning (HVAC) systems of the type, and more particularly to a door mechanism of the HVAC system, which can slide therein to control air flow.

### Background of the Invention

Modern vehicles are designed to provide passengers with comfort, convenience, and safety. One comfort system that few could live without is an air conditioning system. The air conditioning system is used in the modem vehicles is designed to cool, dehumidify, clean, and circulate the air in a vehicle. The air conditioning system presents a closed, pressurized system that has a compressor, a condenser, a receiver/dehydrator (R/D), an expansion valve or orifice tube and a plurality of additional components, such as a box shaped housing, known as a heating, ventilation and air conditioning system (HVAC system). A heart of the HVAC system, used in combination therewith to increase efficiency and dependability of the air conditioning system, is a box shaped housing containing an evaporator and heater, which are spaced apart, with inner faces that face one another and outer faces that face away from one another. Such systems obviously require enough space between the evaporator and the heater for air mixing doors, positioned therebetween, to swing, limiting how compact the entire HVAC system can be made. In addition, the air mixing doors tend to lack linearity. That is, they tend to be all on, or all off, but are far less adept at attaining.

Alluding to the above, the HVAC systems permit occupants to select a desired temperature for their individual zones and automatically maintain these zones at the pre-selected temperature. Such operation necessarily requires the use and operation of multiple valves and ducts to achieve the desired operation of the HVAC system. While the sophistication and complexity of the HVAC system has steadily increased, the design of valves utilized in HVAC system has remained relatively unchanged throughout the years. The HVAC systems now include a number of separate valves that have been automated through the use of various types of actuators mounted exteriorly to the HVAC module and either connected to the valve directly or with mechanical linkages such as gears, push rods, or mechanical arms.

Various HVAC systems and designs are disclosed in the United States Patent Nos. 4,899,809 to Takenaka et al.; 6,092,592 to Toyoshima et al.; 6,270,400 to Tsurushima et al.; 6,305,462 to Tsurushima et al.; 6,347,988 to Kurokawa et al.; 6,382,305 to Sano; 6,450,877 to Tsurushima et al.; 6,508,703 to Uemura et al.; 6,569,009 to Nishikawa et al.; 6,612,922 and 6,688,964 both to Uemura et al.

The United States Patent No. 6,092,592 to Toyoshima et al., for example, teaches an HVAC unit for a vehicle having a temperature control system. A first air mixing door of the temperature control system is used for adjusting an opening degree of a cool air passage through which air having passed through an evaporator bypasses a heater core. A second air mixing door of the temperature control system is used for adjusting an opening degree of an air inlet portion of the heater core. The first and second air mixing doors include a rotation shaft at a center and connected to a housing to facilitate a butterfly-like rotation of the first and second doors to mix cool and hot air. The first and second mixing doors are substantially spaced from one another thereby diminishing packaging value of the air conditioning system.

The United States Patent No. 6,305,462 to Tsurushima et al. teaches a door mechanism for an automotive air conditioning system. Unfortunately, the door mechanism taught by the United States Patent No. 6,305,462 to Tsurushima et al. separates cold and hot air streams therefore without promoting mixing of the cold and hot air streams, which results in the need for various baffles and/or a mixing door to be added to achieve a desired temperature. Another example, taught by the 6,688,964 to Uemura et al. is a door mechanism, wherein a pair of door valves are formed from a polymeric film and are spaced from one another at a fixed distance.

Document DE 102 01 771, which is considered as the closest prior art, discloses an other example of such an air conditioning assembly.

There is a constant need in the area of an automotive heating ventilation and air conditioning (HVAC) system for a door mechanism, which will improve packaging characteristics of the HVAC system, improve mixing of cold and hot air streams to achieve a desired temperature to control air flow into the interior of the vehicle, and to eliminate baffles or mixing doors.

### Summary of the Invention

An air conditioning assembly for an automotive vehicle includes a housing defining two air passages disposed in side by side relationship. A first sliding valve plate and a second sliding valve plate are both supported by the housing for sliding movement across the air passages between a first position for closing one of the air passages and a second position for closing the other of the air passages. A driving mechanism of the air conditioning assembly is supported by the housing. The driving mechanism moves the first sliding valve plate from the first position to the second position while the second sliding valve plate remains in the first position. The driving mechanism thereafter moves the second sliding valve plate from the first position to the second position while the first sliding valve plate remains in the second position.

An advantage of the present invention is to provide a driving mechanism for sliding first and second valve plates, which improves packaging characteristics of the HVAC system.

Another advantage of the present invention is to provide a driving mechanism that improves mixing of cold and hot air streams to achieve a desired temperature to control air flow into the interior of the automotive vehicle by sliding the first and second valve plates between the first and second positions to achieve a desired comfort level for a passenger.

Still another advantage of the present invention is to provide a driving mechanism that eliminates the need for baffles or mixing doors used in the prior art patents for mixing of cold and hot air streams to achieve a desired temperature in the interior of the automotive vehicle.

### Brief Description Of The Drawings

Other advantages of the present invention will be readily appreciated, as the same becomes better understood by reference to the following detailed description when considered in connection with the accompanying drawings wherein:
Figure 1 is a front and partially cross sectional view of an automotive vehicle showing an inventive HVAC system disposed therein;
Figure 2 is an exploded view of a housing of the HVAC system for holding first and second sliding valve plates;
Figure 3 is perspective and partially cross sectional view of the first and second sliding valve plates and rotatable shaft with partial gears for mechanically engaging and driving the first and second sliding valve plates within the housing between various air mixing positions;
Figure 4 is a cross sectional view of the HVAC system with the housing disposed therein with the first and second sliding valve plates connected to one another in a full hot position for directing the entire air stream through a heater core;
Figure 5 is a perspective view of the housing with the first and second sliding valve plates disposed therein in the full hot position;
Figure 6 is a cross sectional view of the HVAC system with the housing disposed therein with the first and second sliding valve plates spaced one from the other a full air mixing position;
Figure 7 is perspective view of the housing with the first and second sliding valve plates spaced one from the other in the full air mixing position;
Figure 8 is a cross sectional view of the HVAC system with the housing disposed therein with the first and second sliding valve plates connected to one another in a full cold position for blocking the entire air stream passage through the heater core; and
Figure 9 is perspective view of the housing with the first and second sliding valve plates disposed therein in the full cold position.

### Detailed Description Of The Invention

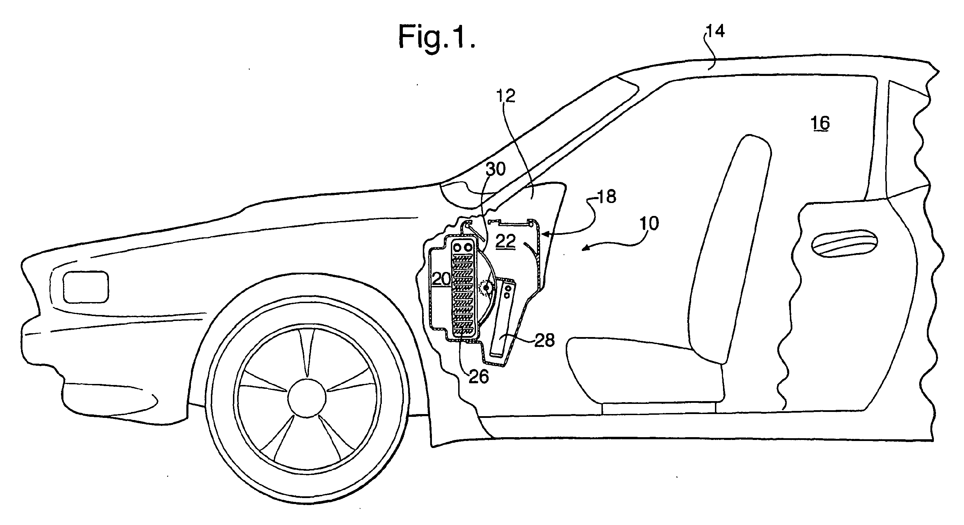

Referring to Figures 1, an air conditioning system, generally shown at 10 is disposed in an instrument panel 12 on a vehicle 14 front side of a passenger compartment 16. The air conditioning system 10 includes a housing, generally indicated at 18, having and at least two sections 20 and 22, and two air passages 1 and 2 disposed in side by side relationship. A blower device 24 is connected to the housing 18 for introducing air therein. An evaporator 26 is disposed in one of the housing sections 20 for taking heat from the air discharged from the blower device 24 to produce cool air. A heater 28 is disposed in the other of the sections 22 and is positioned downstream of the evaporator 26 for adding heat to the cool air to produce warm air.

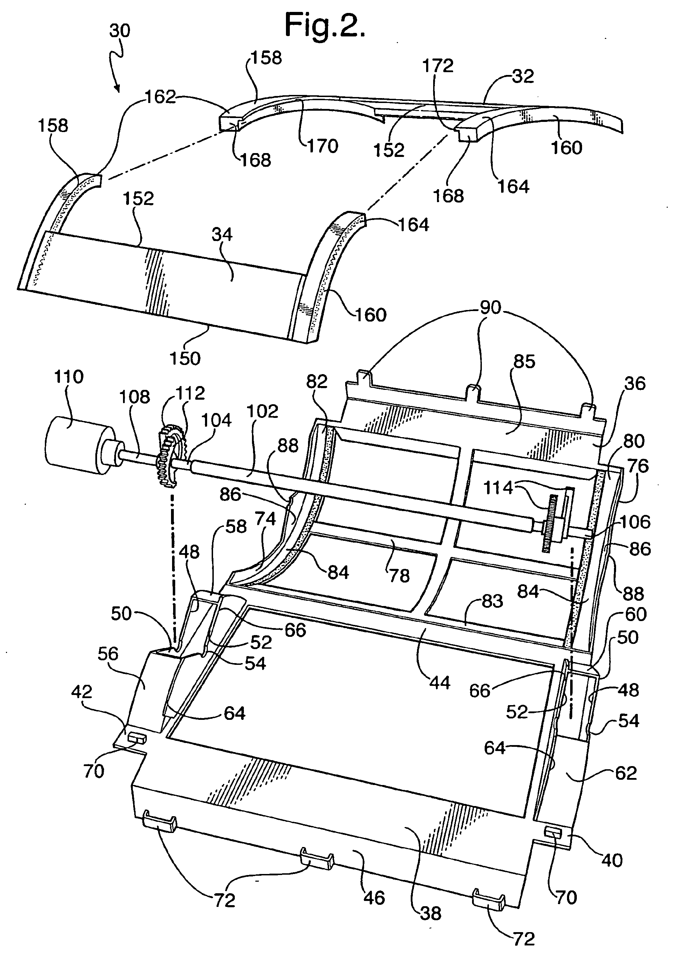

As illustrated in Figure 2, a support frame, generally indicated at 30, of the air conditioning system 10 is designed for holding a first sliding valve plate 32 and a second sliding valve plate 34, discussed in greater details further below. The support frame 30 is supported by the housing 18 and extends between the two sections 20 and 22. The support frame 30 includes top portion 36 and a bottom portion 38 portions for facilitating slidable movements of the aforementioned first and second sliding valve plates 32 and 34. The bottom portion 38 includes side walls 40 and 42 spaced from one another and interconnected by spaced end walls 44 and 46 each presenting a crescent configuration. A pocket portion 48 of each end wall 44 and 46 presents a pair of spaced V-shaped edges 50 and 52. Each V-shaped edge 50 and 52 has a first or bottom semi-circular opening 54 defined therein.

Referring to Figure 2, a pair of convex tracks 56, 58 and 60, 62 are integral with the pocket portion 48. Each of the convex tracks 56, 58 and 60, 62 extends from the respective pocket portions 48 to the respective side wall 44 and 46 of the bottom portion 38 to define a track connection 68 therebetween. Each convex track 56, 58 and 60, 62 presents an outer side edge 64 and 66 integral with and extending upwardly therefrom. A stopper 70 extends from each track connection area 68 and is designed for limiting slidable motion of the aforementioned first and second sliding valves 32 and 34. A plurality of female connectors 72 integral with and are spaced along one of the side walls 40 of the bottom portion 38.

As illustrated in Figure 2, the top portion 36 of the support frame 30 is pivotably connected or connected by an integral lunge to the bottom portion 38. The top portion 36 may be pivoted into overlapping engagement with the bottom portion 38. A pair of spaced traverse walls 74 and 76 are integral with and extend upwardly from the end walls 80 and 82. The top portion 36 further includes a pair of side walls 80 and 82 interconnected by at least one spaced member 78 laterally extending therebetween.. The top portion 36 also includes end walls 83 and 85 each of which presents a wedged configuration and is integral with and interconnects the side walls 80 and 82 of the top portion 36 at the respective ends.

Alluding to the above, each side wall 80 and 82 presents a concave track 84 and an outer lip portion 86 is integral with each transverse wall 74 and 76 and extends outwardly from the concave track 84 of each end wall 80 and 82. Each concave track 84 is cooperable with the convex tracks 56, 58 and 60, 62 of the bottom portion 38. As best shown in Figure 2, each concave track 84 includes the V-shaped lip portion 86 integral with and extending from each of the concave tracks 84 of each side wall 80 and 82 to define a complimentary engagement with the V-shaped edge of the aforementioned pocket portion 48. The lip portion 86 presents a second or top semi-circular opening 88 to complement with the first or bottom semi-circular opening to define a circular window therebetween. As the top portion and the bottom portion of the housing 18 are engaged one with another, a plurality of male connectors 90 integral with and extending from another side wall of the top portion are mechanically engaged with the female connectors to lock the top and bottom portions one with another.

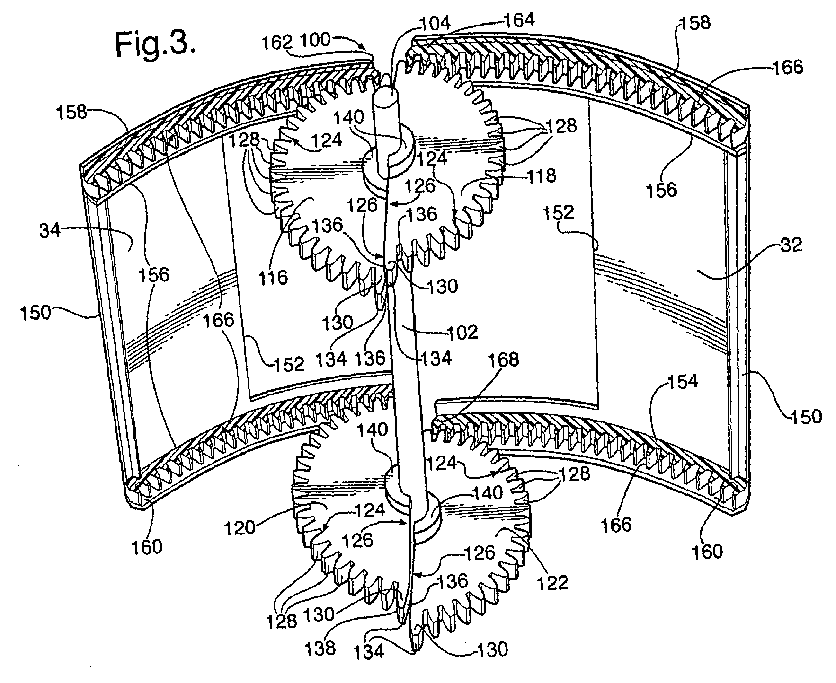

Referring to Figure 3, a driving mechanism of the present invention is generally indicated at 100. The driving mechanism 100 includes a rotatable shaft 102 having terminal ends 104 and 106. The rotatable shaft 102 is supported by and extends through the aforementioned window. A crank 108 is connected to one of the terminal ends 104 of the rotatable shaft 102. An actuator 110 is operably connected to the crank 108 for rotating the rotatable shaft 102 in clockwise and counterclockwise directions with respect to different operational modes of the air conditioning system 10.

Alluding to the above, the driving mechanism 100 comprises two sets of partial gears, generally indicated at 112 and 114, spaced one from the other along the rotatable shaft 102. Each set 112 and 114 includes at least two partial gears 116, 118, 120, 122, respectively, with each partial gear 116, 118, 120, 122, extending radially from the rotatable shaft 102 and being rigidly connected to and rotatable with the rotatable shaft 102. The partial gears 116, 118, 120, 122 are grouped by two to define the aforementioned sets 112 and 114 with each partial gear in each set further defined as inner 116, 120 and outer 118, 122 gears. Each set of partial gears 112 and 114 is housed in the pocket portion of each end wall of the bottom portion. Each partial gear 116, 118, 120, 122 presents a semi-circular periphery, generally indicated at 124, extending to a diametrical side, generally indicated at 126. The inner 116 and 120 and outer 118 and 122 partial gears of each set 112 and 114 are adjacently spaced from one another longitudinally along the rotatable shaft 102 to define a gap therebetween.

As it will become more illustrative as the description of the present invention proceeds, the diametrical side 126 of each aforementioned partial gear 116, 118, 120, 122 oppositely faces one another. A plurality of spaced teeth 128 are integral with and extend from the semi-circular periphery 124 of each partial gear 116, 118, 120, and 122. A lug 130 extends radially from the semi-circular periphery 124 two of the partial gears 120 and 122. Each lug 130 presents a head 134 and an inclined side 136 extending from the head 134 and interconnecting the diametrical side 126 with the head 134. A straight side 138 of each lug 130 extends from the head 134 interconnects the head 134 with the semi-circular periphery 124. A neck 140 is integral with and extending perpendicularly from each the partial gear 116, 118, 120, and 122 to receive a pin (not shown) extending therethrough to define the aforementioned rigidly connection of each partial gear 116, 118, 120, and 122 to the rotatable shaft 102 in a manner known to those skilled in the art.

As further illustrated in Figure 3, the first sliding valve plate and the second sliding valve plate are supported by the support frame 30. The first sliding valve plate and the second sliding valve plate present external and internal surfaces interconnected a pair of end walls. The first sliding valve plate and the second sliding valve plate includes a pair of opposing racks integral with and extending from each end walls to a distal end. Each rack presents a geared surface to define a meshing engagement with the plurality of spaced teeth extending from the semi-circular periphery of one of the partial gears, more particularly the outer partial gears of each set of partial gears. A distal wall is defined at each distal end for presenting a frictional engagement of one side of the distal wall with the inclined wall of the hook for pushing the first sliding valve relative to the valve support frame 30 as the first sliding valve is movable in one of the clockwise and counterclockwise directions. presenting a frictional engagement between the other side of said distal wall and said straight wall of said hook as said first sliding valve is movable in another of said clockwise and counterclockwise directions. A pair of opposite sliding lips each integral with and extending between each of said opposing racks and said internal surface of said first sliding valve. The second sliding valve is shown in engagement with the first sliding valve.

Similar to the first sliding valve plate, the second sliding valve plate presents external and internal surfaces interconnected pair of end walls presenting a generally barreled configuration. The internal surface of the second sliding valve plate faces the internal surface of the first sliding valve plate to present an overlapping engagement between one another in one operational mode and to disengage one from another in another operational mode. The pair of opposing racks of the second valve plate are slidably disposed within the opposing racks of the first sliding valve plate with the opposing racks of the second sliding valve supported and moved along the opposing sliding lips of the first sliding valve plate. A distal wall defined at each distal end of each opposing rack of the second sliding valve for presenting a frictional engagement of one side of the distal wall each opposing rack of the second sliding valve with the inclined wall of one of the hooks for pushing said second sliding valve relative to said valve support frame 30 as said second sliding valve is movable in one of said clockwise and counterclockwise directions and presenting a frictional engagement between the other side of said distal wall of each opposing rack of said second sliding valve and said straight wall of the other of said hooks as said second sliding valve is movable in another of said clockwise and counterclockwise directions, said first and second sliding valves disposed in said track housing 18.

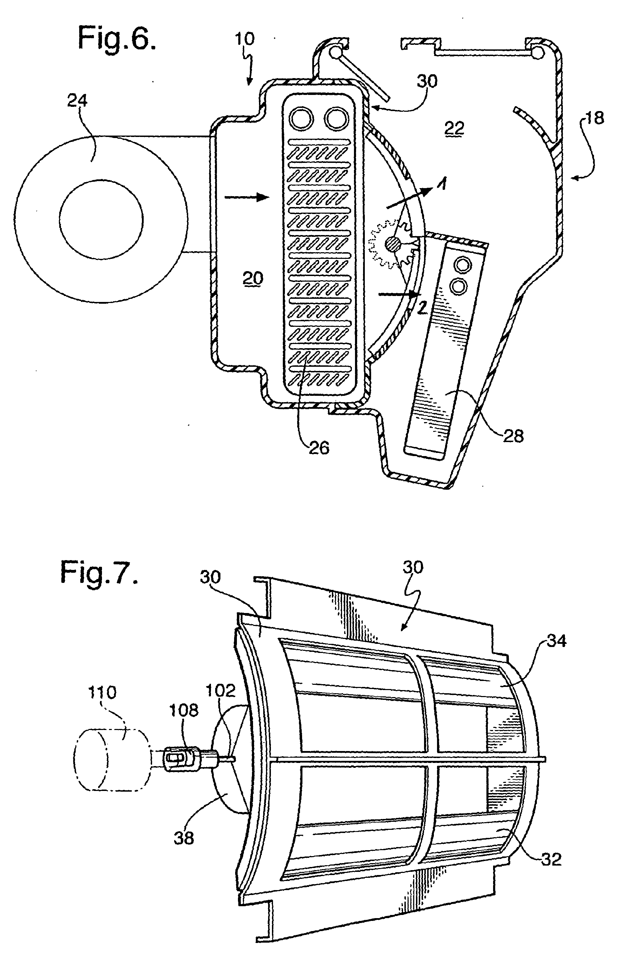

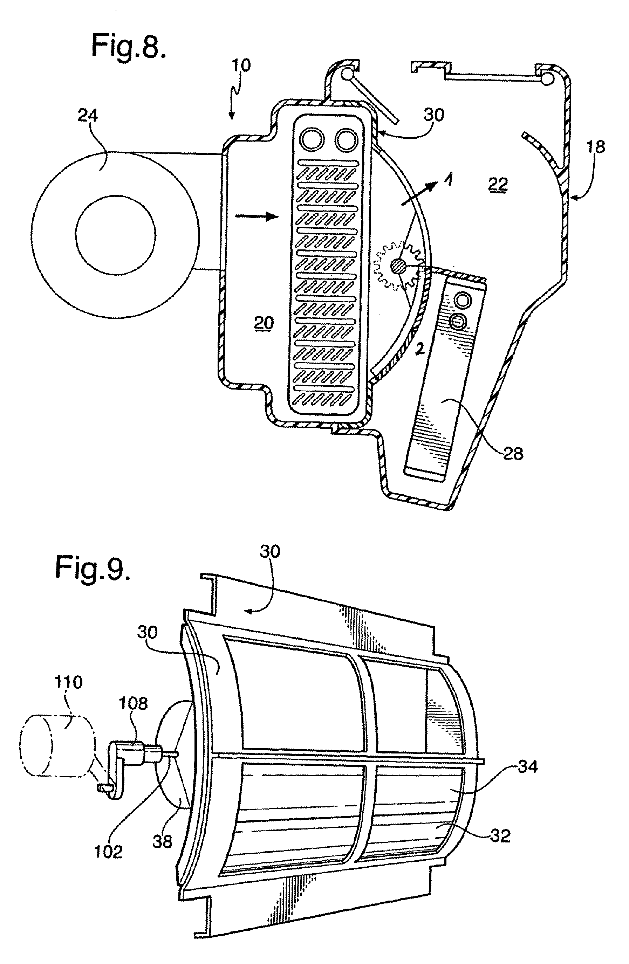

The first and second sliding valve plates present a generally barreled configuration to mate with the support frame having barreled configuration, as shown in Figures 1 through 9. Alternatively, the first and second sliding valve plates may present a planar configuration to mate with the support frame having planar configuration (both not shown).

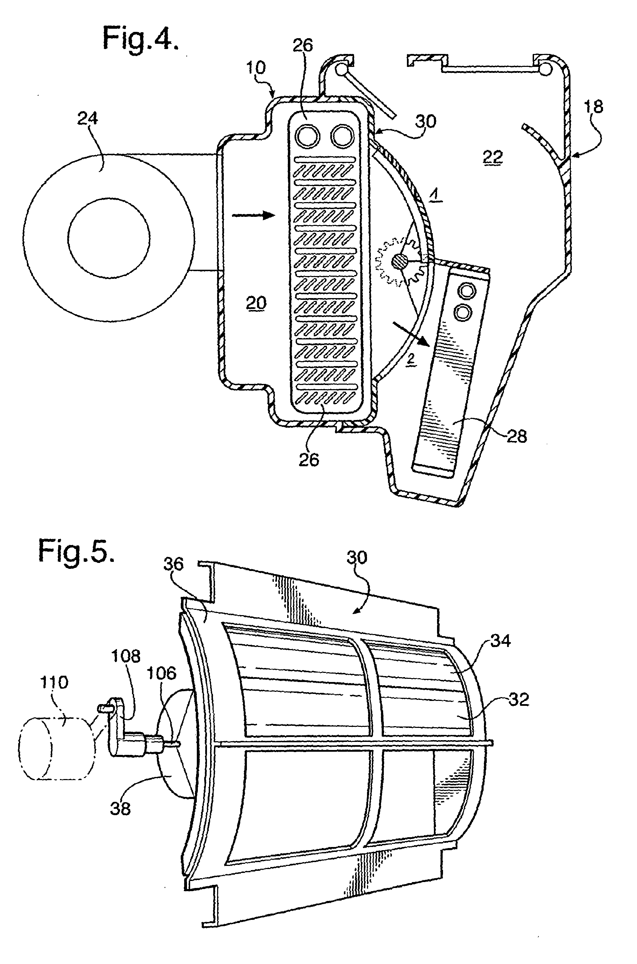

In operation, as best shown in Figures 4 through 9 the first and second sliding valves are sequentially moved by the rotatable shaft operatively connected to the actuator between a full warm position and a full cool position. As the air mixing cycle begins, the first and second sliding valve plates remain in abutting engagement in one of the full cold position or full hot position. Then, as the air mixing cycle continues, one of the first or second sliding valve plates first is moved from the full cold position to the full warm position while the other of the first and second sliding valve plates remains in the cold position. Each of the first and second sliding valve plates cover one half of each of the two air passages (1, 2) so that each of the air passages is half closed when the first sliding valve plate is in the full cold position and the second sliding valve plate is in the full warm position. The driving mechanism of the present invention improves mixing of cold and hot air streams to achieve a desired temperature to control air flow into the interior of the automotive vehicle by sliding the first and second valve plates at various distanced one from the other and between the full warm and full cold positions to achieve a desired comfort level for a passenger.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An air conditioning assembly (10) for an automotive vehicle (14) comprising;
a housing (18) defining two air passages (1, 2) disposed in side by side relationship, a first sliding valve plate (32) and a second sliding valve plate (34), and a driving mechanism (100) for moving said sliding valve plates (32, 34), **characterized in that** said first sliding valve plate (32) and second sliding valve plate (34) are both supported by said housing (18) for sliding movement across said air passages (1, 2) (20, 22) between a first position for closing one of said air passages (1) and a second position for closing the other of said side by side air passages (2); and
**in that** said driving mechanism (100) is supported by said housing (18) for moving said first sliding valve plate (32) from said first position to said second position while said second sliding valve plate (34) remains in said first position and thereafter moving said second sliding valve plate (34) from said first position to said second position while said first sliding valve plate (32) remains in said second position.

2. An air conditioning assembly (10) as set forth in claim 1 wherein each of said first and second sliding valve plates (32, 34) covers one half of each of said two air passages (1, 2) so that each of said air passages (1, 2) is half closed when said first sliding valve plate (32) is in said second position and said second sliding valve plate (34) is in said first position.

3. An air conditioning assembly (10) as set forth in claim 2 wherein said driving mechanism (100) includes a first set of gears (112) each having teeth (128) disposed partially about a semi-circular periphery (124) thereof.

4. An air conditioning assembly (10) as set forth in claim 3 wherein said driving mechanism (100) includes a shaft (102) having terminal ends (104, 106) rotatably supported by said housing (18) with said first set of gears (112) extending radially from said shaft (102).

5. An air conditioning assembly (10) as set forth in claim 4 wherein said driving mechanism (100) includes a second set (114) of said gears extending radially from said shaft (102) and spaced axially along said shaft (102) from said first set of gears (112).

6. An air conditioning assembly (10) as set forth in claim 5 wherein said first set of gears (112) are axially offset from one another and said second set (114) of partial gears with said first and second sets (112, 114) of partial gears presenting a meshing engagement with said first sliding valve plate (32) and said second sliding valve plate (34), respectively.

7. An air conditioning assembly (10) for an automotive vehicle (14) as set forth in claim 6 wherein each of said first and second sliding valve plates (32, 34) include external and internal edges (150, 152) interconnected by pair of end walls (154, 156) and a pair of opposing racks (158, 160) having terminal ends, said each rack of said first and second sliding valve plates (32, 34) presenting a geared surface (166) to define a meshing engagement with said partial gears (116, 118, 120, 122)of said first and second sets (112, 114).

8. An air conditioning assembly (10) for an automotive vehicle (14) as set forth in claim 7 wherein said semi-circular periphery (124) of each gear (116, 118, 120, 122) extends to a diametrical side (126) and a lug extends radially from said semi-circular periphery (124).

9. An air conditioning assembly for an automotive vehicle (14) as set forth in claim 8 wherein each lug (130, 132) presents a head (134) and an inclined wall (136) extending from said head (134) to said semi-circular periphery (124).

10. An air conditioning assembly (10) for an automotive vehicle (14) as set forth in claim 9 including a neck (140) integral with and extending perpendicularly from each partial gear (116, 118, 120, 122) connected each partial gear (116, 118, 120, 122) to said shaft (102).

11. An air conditioning assembly (10) for an automotive vehicle (14) as set forth in claim 10 wherein each terminal end of each rack of said first and second sliding valve plates (32, 34) presents a beveled wall presenting a frictional engagement with said inclined wall of each of said lugs of said first set of partial gears (112) and said second set of partial gears (114), respectively, for selectively moving said first sliding valve plate (32) in one of clockwise and counterclockwise directions from said first position to said second position while said second sliding valve plate (34) remains in said first position and thereafter moving said second sliding valve plate (34) in another of said clockwise and said counterclockwise directions from said first position to said second position while said first sliding valve plate (32) remains in said second position.

12. An air conditioning assembly (10) for an automotive vehicle (14) as set forth in claim 11 including a support frame (30) disposed in said housing (18) for supporting said first sliding valve plate (32) and second sliding valve plate (34), said support frame (30) having top and bottom portions (36, 38) with each of said top portion and bottom portion (36, 38) having spaced side walls (40, 42).

13. An air conditioning assembly (10) for an automotive vehicle (14) as set forth in claim 12 including a pocket portion (48) defined in each of said spaced side walls (40, 42) of said bottom portion (38) having a first semi-circular opening (54) defined therein.

14. An air conditioning assembly (10) for an automotive vehicle (14) as set forth in claim 13 including a pair of convex tracks (56, 58, 60, 62) with each of said tracks (56, 58, 60, 62) integral with and extending from said pocket portion (48) to each of said spaced side walls (40, 42) of said bottom portion (38) to define a track connection therebetween.

15. An air conditioning assembly (10) for an automotive vehicle (14) as set forth in claim 14 including a plurality of female connectors (72) integral with said bottom portion (38) and male connectors (90) integral with said top portion (36).

16. An air conditioning assembly (10) for an automotive vehicle (14) as set forth in claim 15 wherein said top portion (36) is pivotably connected to said bottom portion (38) and presenting an overlapping engagement with said bottom portion (38) with said male connector (90) engaged in said female connectors (72).

17. An air conditioning assembly (10) for an automotive vehicle (14) as set forth in claim 16 including a second semi-circular opening (88) defined in each said spaced side wall (40, 42) of said top portion (36) to complement with said first semi-circular opening (54) to define a window as said top and bottom portions (36, 38) of said support frame (30) are engaged one with another with said shaft (102) extending through and supported in said window.

18. An air conditioning assembly (10) for an automotive vehicle (14) as set forth in claim 17 wherein said support frame presents a planar configuration.

19. An air conditioning assembly (10) for an automotive vehicle (14) as set forth in claim 17 wherein said support frame (30) presents a barreled configuration.

20. An air conditioning assembly (10) for an automotive vehicle (14) as set forth in claim 18 wherein each of said first and second sliding valve plates (32, 34) presents a planar configuration to mate with said support frame (30) having said planar configuration.

21. An air conditioning assembly (10) for an automotive vehicle (14) as set forth in claim 19 wherein each of said first and second sliding valve plates (32, 34) presents a generally barreled configuration to mate with said support frame (30) having said barreled configuration.

22. An air conditioning assembly (10) for an automotive vehicle (14) as set forth in claim 1 wherein said first and second sliding valve plates (32, 34) are formed from a polymeric material.

## Patentansprüche

1. Klimaanlagenanordnung (10) für ein Kraftfahrzeug (14) aufweisend:
ein Gehäuse (18), das zwei in nebeneinander liegender Beziehung angeordnete Luftdurchlässe (1, 2) definiert, eine erste Schiebeventilplatte (32) und eine zweite Schiebeventilplatte (34) und einen Antriebsmechanismus (100) zum Bewegen der Schiebeventilplatten (32, 34), **gekennzeichnet dadurch, dass** sowohl die erste Schiebeventilplatte (32) als auch die zweite Schiebeventilplatte (34) zur gleitenden Bewegung über die Luftdurchlässe (1, 2) (20, 22) zwischen einer ersten Position zum Schließen von einem der Luftdurchlässe (1) und einer zweite Position zum Schließen des anderen der beiden nebeneinander liegenden Luftdurchlässe (2) durch das Gehäuse (18) gestützt sind; und **dadurch**, dass der Antriebsmechanismus (100) zum Bewegen der ersten Schiebeventilplatte (32) von der ersten Position zur zweiten Position, während die zweite Schiebeventilplatte (34) in der ersten Position bleibt, und danach Bewegen der zweiten Schiebeventilplatte (34) von der ersten Position zur zweiten Position, während die erste gleitende Ventilplatte (32) in der zweiten Position bleibt, durch das Gehäuse (18) gestützt ist.

2. Klimaanlagenanordnung (10) nach Anspruch 1, wobei jede der ersten und zweiten Schiebeventilplatten (32, 34) eine Hälfte von jedem der zwei Luftdurchlässe (1, 2) derart abdeckt, dass jeder der Luftdurchlässe (1, 2) zur Hälfte geschlossen ist, wenn die erste Schiebeventilplatte (32) in der zweiten Position ist und die zweite Schiebeventilplatte (34) in der ersten Position ist.

3. Klimaanlagenanordnung (10) nach Anspruch 2, wobei der Antriebsmechanismus (100) einen ersten Satz an Rädern (112) umfasst, wobei jedes Zähne (128) aufweist, die teilweise um einen halbkreisförmigen Umfang (124) davon angeordnet sind.

4. Klimaanlagenanordnung (10) nach Anspruch 3, wobei der Antriebsmechanismus (100) eine Welle (102) mit Abschlussenden (104, 106) umfasst, die durch das Gehäuse (18) drehbar gestützt ist, wobei sich der erste Satz an Rädern (112) radial von der Welle (102) erstreckt.

5. Klimaanlagenanordnung (10) nach Anspruch 4, wobei der Antriebsmechanismus (100) einen zweiten Satz (114) der Räder umfasst, die sich von der Welle (102) radial erstrecken und vom ersten Satz an Rädern (112) entlang der Welle (102) axial beabstandet sind.

6. Klimaanlagenanordnung (10) nach Anspruch 5, wobei der erste Satz an Rädern (112) axial voneinander und von dem zweiten Satz (114) an Teilrädern versetzt sind, wobei der erste und zweite Satz (112, 114) an Teilrädern einen Zahneingriff mit der ersten Schiebeventilplatte (32) bzw. der zweiten Schiebeventilplatte (34) aufweisen.

7. Klimaanlagenanordnung (10) für ein Kraftfahrzeug (14) nach Anspruch 6, wobei jede der ersten und zweiten Schiebeventilplatten (32, 34) Außen- und Innenkanten (150, 152) umfasst, die durch ein Paar Endwände (154, 156) und ein Paar gegenüber liegender Zahnstangen (158, 160) mit Abschlussenden verbunden sind, wobei jede Zahnstange der ersten und zweiten gleitenden Ventilplatte (32, 34) eine gezahnte Oberfläche (166) aufweist, um einen Zahneingriff mit den Teilrädern (116, 118, 120, 122) der ersten und zweiten Sätze (112, 114) zu definieren.

8. Klimaanlagenanordnung (10) für ein Kraftfahrzeug (14) nach Anspruch 7, wobei sich der halbkreisförmige Umfang (124) von jedem Rad (116, 118, 120, 122) zu einer diametrischen Seite (126) erstreckt und sich ein Ansatz radial vom halbkreisförmigen Umfang (124) erstreckt.

9. Klimaanlagenanordnung für ein Kraftfahrzeug (14) nach Anspruch 8, wobei jeder Ansatz (130, 132) einen Kopf (134) aufweist und wobei sich eine schräge Wand (136) vom Kopf (134) zum halbkreisförmigen Umfang (124) erstreckt.

10. Klimaanlagenanordnung (10) für ein Kraftfahrzeug (14) nach Anspruch 9, umfassend einen Zapfen (140), der mit jedem Teilrad (116, 118, 120, 122) integral ist und sich rechtwinklig davon erstreckt und jedes Teilrad (116, 118, 120, 122) mit der Welle (102) verbindet.

11. Klimaanlagenanordnung (10) für ein Kraftfahrzeug (14) nach Anspruch 10, wobei jedes Abschlussende jeder Zahnstange der ersten und zweiten Schiebeventilplatte (32, 34) eine abgeschrägte Wand aufweist, die einen Reibungseingriff mit der schrägen Wand von jedem der Ansätze des ersten Satzes an Teilrädern (112) bzw. des zweiten Satzes an Teilrädern (114) aufweist, um die erste Schiebeventilplatte (32) in eine der Richtungen im Uhrzeigersinn und gegen den Uhrzeigersinn von der ersten Position zur zweiten Position selektiv zu bewegen, während die zweite Schiebeventilplatte (34) in der ersten Position bleibt, und danach die zweite Schiebeventilplatte (34) in eine andere der Richtungen im Uhrzeigersinn und gegen den Uhrzeigersinn von der ersten Position zur zweiten Position zu bewegen, während die erste Schiebeventilplatte (34) in der zweiten Position bleibt.

12. Klimaanlagenanordnung (10) für ein Kraftfahrzeug (14) nach Anspruch 11, umfassend einen im Gehäuse (18) angeordneten Stützrahmen (30) zum Stützen der ersten Schiebeventilplatte (32) und der zweiten Schiebeventilplatte (34), wobei der Stützrahmen (30) Ober- und Unterteile (36, 38) aufweist, wobei jedes des Oberteils und Unterteils (36, 38) beabstandete Seitenwände (40, 42) aufweist.

13. Klimaanlagenanordnung (10) für ein Kraftfahrzeug (14) nach Anspruch 12, umfassend ein in jeder der beabstandeten Seitenwände (40, 42) des Unterteils (38) definiertes Taschenteil (48) mit einer darin definierten ersten halbkreisförmigen Öffnung (54).

14. Klimaanlagenanordnung (10) für ein Kraftfahrzeug (14) nach Anspruch 13, umfassend ein Paar konvexer Laufbahnen (56, 58, 60, 62), wobei jede der Bahnen (56, 58, 60, 62) mit dem Taschenteil (48) integral ist und sich davon zu jeder der beabstandeten Seitenwände (40, 42) des Unterteils (38) erstreckt, um eine Laufbahnverbindung dazwischen zu definieren.

15. Klimaanlagenanordnung (10) für ein Kraftfahrzeug (14) nach Anspruch 14, umfassend eine Vielzahl an mit dem Unterteil (38) integralen Steckbuchsen (72) und mit dem Oberteil (36) integralen Steckern (90).

16. Klimaanlagenanordnung (10) für ein Kraftfahrzeug (14) nach Anspruch 15, wobei das Oberteil (36) mit dem Unterteil (38) drehbar verbunden ist und einen überlappenden Eingriff mit dem Unterteil (38) aufweist, wobei der Stecker (90) mit den Steckbuchsen (72) in Eingriff ist.

17. Klimaanlagenanordnung (10) für ein Kraftfahrzeug (14) nach Anspruch 16, umfassend eine zweite in jeder beabstandeten Seitenwand (40, 42) des Oberteils (36) definierte halbkreisförmige Öffnung (88), um sich mit der ersten halbkreisförmigen Öffnung (54) zu ergänzen, um ein Fenster zu definieren, wenn die Ober- und Unterteile (36, 38) des Stützrahmens (30) miteinander im Eingriff sind, wobei sich die Welle (102) durch das Fenster erstreckt und darin gestützt ist.

18. Klimaanlagenanordnung (10) für ein Kraftfahrzeug (14) nach Anspruch 17, wobei der Stützrahmen (30) eine ebene Konfiguration aufweist.

19. Klimaanlagenanordnung (10) für ein Kraftfahrzeug (14) nach Anspruch 17, wobei der Stützrahmen (30) eine tonnenförmige Konfiguration aufweist.

20. Klimaanlagenanordnung (10) für ein Kraftfahrzeug (14) nach Anspruch 18, wobei jede der ersten und zweiten Schiebeventilplatten (32, 34) eine ebene Konfiguration aufweist, um mit dem Stützrahmen (30) mit der ebenen Konfiguration zusammen zu passen.

21. Klimaanlagenanordnung (10) für ein Kraftfahrzeug (14) nach Anspruch 19, wobei jede der ersten und zweiten Schiebeventilplatten (32, 34) eine im Allgemeinen tonnenförmige Konfiguration aufweist, um mit dem Stützrahmen (30) mit der tonnenförmigen Konfiguration zusammen zu passen.

22. Klimaanlagenanordnung (10) für ein Kraftfahrzeug (14) nach Anspruch 1, wobei die ersten und zweiten Schiebeventilplatten (32, 34) aus einem Polymermaterial gebildet sind.

## Revendications

1. Assemblage de climatisation (10) pour véhicule automobile (14) comportant :
un boîtier (18) définissant deux passages d'air (1, 2) placés en relation côte à côte,
des première (32) et deuxième (34) plaques de soupape coulissantes et un mécanisme d'entraînement (100) servant à déplacer lesdites plaques de soupape coulissantes (32, 34),
**caractérisé en ce que** lesdites première (32) et deuxième (34) plaques de soupape coulissantes sont toutes deux supportées par ledit boîtier (18) pour permettre un mouvement coulissant à travers lesdits passages d'air (1, 2) (20, 22) entre une première position pour fermer un desdits passages d'air (1) et une deuxième position pour fermer l'autre (2) desdits passages d'air côte à côte; et **en ce que** ledit mécanisme d'entraînement (100) est supporté par ledit boîtier (18) pour déplacer ladite première plaque de soupape coulissante (32) de la dite première à ladite deuxième position tandis que ladite deuxième plaque de soupape coulissante (34) reste dans ladite première position et pour déplacer ensuite ladite deuxième plaque de soupape coulissante (34) de ladite première à ladite deuxième position tandis que ladite première plaque de soupape coulissante (32) reste dans ladite deuxième position.

2. Assemblage de climatisation (10) selon la revendication 1, dans lequel chacune desdites première et deuxième plaques de soupape coulissantes (32, 34) couvre une moitié de chacun desdits deux passages d'air (1, 2) de façon à ce que chacun desdits passages d'air (1, 2) soit à moitié fermé quand ladite première plaque de soupape coulissante (32) est dans ladite deuxième position et ladite deuxième plaque de soupape coulissante (34) est dans ladite première position.

3. Assemblage de climatisation (10) selon la revendication 2, dans lequel ledit mécanisme d'entraînement (100) comprend un premier ensemble d'engrenages (112), chacun comportant des dents (128) partiellement placées autour de sa périphérie en demi-cercle (124).

4. Assemblage de climatisation (10) selon la revendication 3, dans lequel ledit mécanisme d'entraînement (100) comprend un arbre (102) dont les extrémités terminales (104, 106) sont supportées en rotation par ledit boîtier (18), ledit premier ensemble d'engrenages (112) s'étendant radialement à partir dudit arbre (102).

5. Assemblage de climatisation (10) selon la revendication 4, dans lequel ledit mécanisme d'entraînement (100) comprend un deuxième ensemble (114) desdits engrenages s'étendant radialement à partir dudit arbre (102) et espacé axialement le long dudit arbre (102) dudit premier ensemble d'engrenages (112).

6. Assemblage de climatisation (10) selon la revendication 5, dans lequel les engrenages dudit premier ensemble d'engrenages (112) sont décalés axialement les uns des autres et ledit deuxième ensemble (114) d'engrenages partiels, avec lesdits premier et deuxième ensembles (112, 114) d'engrenages partiels présentant un engagement en prise avec lesdites première (32) et deuxième (34) plaques de soupape coulissantes, respectivement.

7. Assemblage de climatisation (10) pour véhicule automobile (14) selon la revendication 6, dans lequel chacune desdites première et deuxième plaques de soupape coulissantes (32, 34) comprend des bords externe et interne (150, 152) interconnectés par une paire de parois d'extrémités (154, 156) et une paire de crémaillères opposées (158, 160) ayant des extrémités terminales, chaque dite crémaillère desdites première et deuxième plaques de soupape coulissantes (32, 34) présentant une surface équipée d'engrenages (166) pour définir un engagement en prise avec lesdits engrenages partiels (116, 118, 120, 122) desdits premier et deuxième ensembles (112, 114).

8. Assemblage de climatisation (10) pour véhicule automobile (14) selon la revendication 7, dans lequel ladite périphérie en demi-cercle (124) de chaque engrenage (116, 118, 120, 122) s'étend vers un côté diamétral (126) et une patte s'étend radialement à partir de ladite périphérie en demi-cercle (124).

9. Assemblage de climatisation pour véhicule automobile (14) selon la revendication 8, dans lequel chaque patte (130, 132) présente une tête (134) et une paroi inclinée (136) s'étendant de ladite tête (134) à ladite périphérie en demi-cercle (124).

10. Assemblage de climatisation (10) pour véhicule automobile (14) selon la revendication 9, comprenant un collier (140) faisant partie intégrante et s'étendant perpendiculairement à partir de chaque engrenage partiel (116, 118, 120, 122) chaque engrenage partiel (16, 118, 120, 122) connecté audit arbre (102).

11. Assemblage de climatisation (10) pour véhicule automobile (14) selon la revendication 10, dans lequel chaque extrémité terminale de chaque crémaillère desdites première et deuxième plaques de soupape coulissantes (32, 34) présente une paroi en biseau qui présente un engagement par friction avec ladite paroi inclinée de chacune desdites pattes desdits premier (112) et deuxième (114) ensembles d'engrenages partiels, respectivement, pour déplacer sélectivement ladite première plaque de soupape coulissante (32) dans un des sens des aiguilles d'une montre ou en sens contraire de ladite première à ladite deuxième position tandis que ladite deuxième plaque de soupape coulissante (34) reste dans ladite première position et pour ensuite déplacer ladite deuxième plaque de soupape coulissante (34) dans l'autre dudit sens des aiguilles d'une montre ou dans ledit sens contraire de ladite première à la dite deuxième position tandis que ladite première plaque de soupape coulissante (32) reste dans ladite deuxième position.

12. Assemblage de climatisation (10) pour véhicule automobile (14) selon la revendication 11, comprenant un cadre de support (30) placé dans ledit boîtier (18) pour supporter lesdites première (32) et deuxième (34) plaques de soupape coulissantes, ledit cadre de support (30) ayant des parties supérieure et inférieure (36, 38) dont chacune desdites parties supérieures et inférieures (36, 38) comporte des parois latérales (40, 42) espacées.

13. Assemblage de climatisation (10) pour véhicule automobile (14) selon la revendication 12, comprenant une partie creuse (48) définie dans chacune desdites parois latérales espacées (40, 42) de ladite partie inférieure (38) dans laquelle est définie une première ouverture en demi-cercle (54).

14. Assemblage de climatisation (10) pour véhicule automobile (14) selon la revendication 13, comprenant une paire de pistes convexes (56, 58, 60, 62), chacune desdites pistes (56, 58, 60, 62) faisant partie intégrante de et s'étendant de ladite partie creuse (48) à chacune desdites parois latérales espacées (40, 42) de ladite partie inférieure (38) pour définir une connexion par piste entre elles.

15. Assemblage de climatisation (10) pour véhicule automobile (14) selon la revendication 14, comportant plusieurs connecteurs femelles (72) faisant partie intégrante de ladite partie inférieure (38) et plusieurs connecteurs mâles (90) faisant partie intégrante de ladite partie supérieure (36).

16. Assemblage de climatisation (10) pour véhicule automobile (14) selon la revendication 15, dans lequel ladite partie supérieure (36) est reliée par pivotement à ladite partie inférieure (38) et présente un engagement avec recouvrement avec ladite partie inférieure (38) à l'aide dudit connecteur mâle (90) engagés avec lesdits connecteurs femelles (72).

17. Assemblage de climatisation (10) pour véhicule automobile (14) selon la revendication 16, comprenant une deuxième ouverture en demi-cercle (88) définie dans chaque dite paroi latérale espacée (40, 42) de ladite partie supérieure (36) pour compléter avec ladite première ouverture en demi-cercle (54) afin de définir une fenêtre quand lesdites parties supérieure et inférieure (36,38) dudit cadre de support (30) sont engagées l'une avec l'autre, avec ledit arbre (102) passant à travers ladite fenêtre et étant maintenu dans celle-ci.

18. Assemblage de climatisation (10) pour véhicule automobile (14) selon la revendication 17, dans lequel ledit cadre de support présente une configuration planaire.

19. Assemblage de climatisation (10) pour véhicule automobile (14) selon la revendication 17, dans lequel ledit cadre de support (30) présente une configuration cylindrique.

20. Assemblage de climatisation (10) pour véhicule automobile (14) selon la revendication 18, dans lequel chacune desdites première et deuxième plaques de soupape coulissantes (32, 34) présente une configuration planaire pour s'adapter audit cadre de support (30) ayant ladite configuration planaire.

21. Assemblage de climatisation (10) pour véhicule automobile (14) selon la revendication 19, dans lequel chacune desdites première et deuxième plaques de soupape coulissantes (32, 34) présente une configuration globalement cylindrique pour s'adapter audit cadre de support (30) ayant ladite configuration cylindrique.

22. Assemblage de climatisation (10) pour véhicule automobile (14) selon la revendication 1, dans lequel lesdites première et deuxième plaques de soupape coulissantes (32, 34) sont formées à partir d'un matériau polymère.
